# EUROPÄISCHE PATENTSCHRIFT

(11) **EP 2 853 377 B1**
(45) Veröffentlichungstag und Bekanntmachung des Hinweises auf die Patenterteilung: **31.05.2017**
(21) Anmeldenummer: 14186162.5
(22) Anmeldetag: 24.09.2014
(51) Int. Cl.: B29C 63/02, B32B 37/22

(54) **Wechselsystem für Beschichtungsmaschine sowie Verfahren**
Exchange system for a coating machine and method
Système de changement pour machine d'enduction ainsi que procédé

(30) Priorität: 25.09.2013 DE 102013219270
(43) Veröffentlichungstag der Anmeldung: 01.04.2015
(73) Patentinhaber: HOMAG GmbH, 72296 Schopfloch (DE)
(72) Erfinder: Petrak, Axel, 72296 Schopfloch (DE); Hamann, Tim, 72296 Schopfloch (DE)
(74) Vertreter: Hoffmann Eitle

(56) Entgegenhaltungen:
- EP-A2- 1 813 561
- WO-A1-2004/069705
- DE-A1-102009 015 476
- DE-A1-102009 021 676

## Beschreibung

### Technisches Gebiet

Die vorliegende Erfindung betrifft ein Wechselsystem für eine Beschichtungsmaschine, mit dem ein Beschichtungsmaterial, insbesondere ein Kaschiermaterial, zur Aufbringung auf einem Werkstück bereitgestellt wird. Ferner betrifft die vorliegende Erfindung ein Verfahren zum Bereitstellen eines Beschichtungsmaterials, insbesondere Kaschiermaterials.

### Stand der Technik

Im Bereich der Beschichtungsmaschinen schreiten die Entwicklungen in Richtung einer Verringerung der Losgröße fort. Diese Anforderung trifft neben Kantenanleimmaschinen auch auf Kaschiermaschinen zu, mit denen Werkstücke, die insbesondere aus Holz, Holzwerkstoffen oder ähnlichem bestehen, mit einem Kaschiermaterial versehen werden. Die Anforderung nach einem flexiblen Wechsel von Kaschiermaterialien, verbunden mit einer möglichst kurzen Produktlaufzeit und einer großen Vielfalt an Kaschiermaterialien führen in der Praxis zu immer kleineren Losgrößen, die unter Umständen dazu führt, dass für jedes Werkstück individuell ein bestimmtes Kaschiermaterial bereitgestellt und auf dieses aufgebracht werden muss.

Im Bereich der Beschichtungsvorrichtungen zur Kantenbeschichtung ist die DE 10 2009 021 676 A1 bekannt, die eine Zufuhrvorrichtung zeigt.

Ferner ist als weitere Schrift die EP 1 813 561 A2 zu nennen, die ein Verfahren zum Oberflächenbeschichten von Profilsträngen mit Beschichtungsfolienstreifen sowie eine entsprechende Vorrichtung zeigt. Dabei werden auf einer Spule aufgewickelte Beschichtungsfolienstreifen auf Bereitstellungsplätze einer drehbaren Bereitstellungsvorrichtung, die als jederzeit einsehbares Zwischenlager dient, aufgelegt. Durch Drehen der Bereitstellungsvorrichtung wird der Bereitstellungsplatz mit der für den jeweils nächsten Beschichtungsauftrag benötigten Spule einzeln an eine Abspulstation heran geführt.

### Gegenstand der Erfindung

Es ist ein Ziel der vorliegenden Erfindung, eine möglichst flexible Verarbeitung und Handhabung von
Beschichtungsmaterialien, insbesondere Kaschiermaterialien, bereitzustellen.

Der Gegenstand des Anspruchs 1 sowie des Anspruchs 2 stellen hierfür eine Lösung bereit. Weitere beispielhafte Ausführungsformen sind in den abhängigen Ansprüchen ausgeführt. Ferner betrifft die vorliegende Erfindung ein Verfahren nach Anspruch 14.

Dabei umfasst das Wechselsystem gemäß der vorliegenden Erfindung einen Auflagetisch zur Aufnahme eines Werkstücks. Ferner ist mindestens eine Aufnahme eines Beschichtungsmaterials, insbesondere eines Kaschiermaterials, vorgesehen. Dabei befindet sich das Beschichtungsmaterial üblicherweise in einer Verpackungseinheit, insbesondere einer Einwegverpackung, die derart dimensioniert ist, dass sie in der Aufnahme aufgenommen und gehalten werden kann.

Ferner umfasst die Aufnahme eine Öffnung sowie ein Führungselement zum Führen und Anbringen des Beschichtungsmaterials an einem Werkstück, wobei das Führungselement an der Aufnahme integriert ist. Dabei ist das Führungselement an der Aufnahme derart ausgerichtet, dass es in dem Zustand, in dem das Beschichtungsmaterial auf einem Werkstück aufgebracht wird, zum Werkstück weist.

Auch ist die Aufnahme bewegbar, um von einer Übergabeposition, in der die Aufnahme mit dem Beschichtungsmaterial beschickt wird, in eine Betriebsposition verfahren zu werden, in welcher das Beschichtungsmaterial an einem Werkstück aufgebracht wird.

Die vorliegende Erfindung stellt somit eine Vorrichtung bereit, mit der eine große Vielfalt an Beschichtungsmaterialien anwendungsspezifisch bereitgestellt werden können, und somit eine größere Variantenvielfalt gewährleistet werden kann. Gleichzeitig kann wegen der spezifischen Bereitstellung Verschnitt vermieden werden. Dies führt zu einer größeren Flexibilisierung der Prozessabläufe.

Rüstzeiten sowie Reinigungs- und Wartungszeiten werden verkürzt, und die Lagerhaltung vereinfacht bzw. reduziert. Auch können Folgeprozesse einfach mit den Funktionalitäten der Vorrichtung abgestimmt werden.

Gemäß der in Anspruch 2 beschriebenen Lösung ist, anstelle des zuvor beschriebenen Führungselements, ein Führungselement zum Führen und Anbringen des Beschichtungsmaterials an einem Werkstück vorgesehen, welches Führungselement separat von der Aufnahme vorgesehen ist und sich beim Anbringen des Beschichtungsmaterials mit der Aufnahme dieser annähert oder diese berührt.

In einer weiteren Ausführungsform umfasst das Führungselement der Aufnahme ein Heizelement. Auf diese Weise kann das Beschichtungsmaterial im Bereich des Führungselements erwärmt, und ggf. biegsam gemacht werden. Somit lässt sich das Beschichtungsmaterial leichter auf ein Werkstück aufbringen.

Das Führungselement kann entweder wulstförmig ausgebildet sein, oder eine Rolle umfassen. Die wulstförmige Ausgestaltung, die eine bestimmte Krümmung des Führungselements, beispielsweise in Form einer Klothoide, darstellt, lässt sich relativ kostengünstig realisieren, und ist wartungsarm. Darüber hinaus hat das Führungselement einen kleinen Haftreibungskoeffizienten gegenüber Kaschiermaterial. Eine Rolle als Führungselement kann dann zum Einsatz kommen, wenn empfindliche Beschichtungsmaterialien verarbeitet werden. Insbesondere wird eine weiche, gummierte Rolle verwendet, die beispielsweise dämpfende bzw. ausgleichende Eigenschaften aufweist.

In einer Ausführungsform der vorliegenden Erfindung umfasst das Wechselsystem eine drehbare Wechseleinheit, an der die Aufnahme aufgenommen ist. Auf diese Weise kann die Aufnahme von einer Position, in der sie mit dem Beschichtungsmaterial beschickt wird, in eine Betriebsposition gedreht werden, in der das Beschichtungsmaterial an einem Werkstück aufgebracht wird.

Bevorzugt ist die Wechseleinheit ferner in zumindest einer translatorischen Richtung verfahrbar. Auf diese Weise kann die Aufnahme in eine Position bewegt werden, in der das Beschichtungsmaterial aufgenommen wird. Dies kann beispielsweise eine Lagereinheit sein, in der eine Vielzahl von Beschichtungsmaterialien vorgehalten wird.

In einer anderen Ausführungsform ist die Aufnahme in zumindest einer translatorischen Richtung verfahrbar. Auf diese Weise kann die Aufnahme zwischen einer Position, in der sie mit dem Beschichtungsmaterial beschickt wird, und einer Betriebsposition bewegt werden.

Bevorzugt ist die Aufnahme mittels eines elastischen Elements gelagert. Im Falle der drehbaren Wechseleinheit befindet sich das elastische Element somit zwischen der Aufnahme und der Wechseleinheit. In der alternativen Ausführungsform, in der die Aufnahme in zumindest einer translatorischen Richtung verfahrbar ist, befindet sich das elastische Element zwischen der Aufnahme und einer Verfahreinheit, welche die Aufnahme in der translatorischen Richtung bewegt.

In einer Ausführungsform kann das Wechselsystem eine Haftmittelauftragseinheit umfassen, insbesondere eine Düse sowie ein Gegenstück, welche Haftmittelauftragseinheit für einen Haftmittelauftrag auf ein Beschichtungsmaterial bevorzugt relativ zu einer Aufnahme positionierbar ist. Somit kann ein Beschichtungsmaterial verarbeitet werden, das in der das Beschichtungsmaterial aufnehmenden Verpackungseinheit noch nicht mit einem Haftmittel vorbeschichtet wurde. Die eigenständige Positionierbarkeit der Haftmittelauftragseinheit stellt sicher, dass die Haftmittelauftragseinheit für ggf. mehrere Aufnahmen oder an unterschiedlichen Positionen einer Aufnahme verwendet werden kann.

Alternativ zur Düse kann die Haftmittelauftragseinheit auch ein Band zuführen, an dem ein Haftmittel aufgebracht ist, welches im Bereich der Haftmittelauftragseinheit beispielsweise mittels einer Rolle auf das Beschichtungsmaterial übertragen wird. Alternativ kann das Haftmittel selbst bandförmig sein.

In einer weiteren Ausführungsform ist die Haftmittelauftragseinrichtung eingerichtet, die chemischen und/oder physikalischen Eigenschaften des Haftmittels (beispielweise den Schmelzpunkt), die Haftmitteldicke und/oder die Haftmittelmenge zu verändern. Auf diese Weise kann auch das Haftmittel selbst auf eine Bearbeitung mit Losgröße 1 angepasst werden.

In einigen Ausführungsformen ist es vorgesehen, dass das Beschichtungsmaterial bedingt durch den Druck zwischen dem Führungselement und dem Werkstück aus der Aufnahme abgezogen wird. Allerdings ist es auch möglich, im Bereich der Öffnung der Aufnahme zumindest eine Rolle, insbesondere ein Rollenpaar, vorzusehen, um das in der Aufnahme befindliche Beschichtungsmaterial zu fördern. Diese Variante kommt insbesondere bei empfindlichen Beschichtungsmaterialien zum Einsatz, oder bei Ausgestaltungen, wo vor dem Auftrag des Beschichtungsmaterials auf einem Werkstück zusätzliche Bearbeitungsschritte durchgeführt werden, wie das Auftragen einer Haftschicht.

In einer weiteren Ausführungsform umfasst das Wechselsystem eine Steuereinheit, die eine Bewegung der Aufnahme mit einer Bewegung eines Werkstücks in einem Abschnitt synchronisiert, in welchem Abschnitt das Beschichtungsmaterial mit dem Werkstück in Kontakt kommt. Auf diese Weise kann ein Beschichtungsmaterial besonders sanft auf einem Werkstück aufgesetzt werden.

Ferner kann das Wechselsystem eine Lagereinheit umfassen, in der Verpackungseinheiten mit Beschichtungsmaterialien aufgenommen sind. Bei einer solchen Lagereinheit kann es sich beispielsweise um ein Regalsystem handeln.

Auch kann die Aufnahme eine Empfangseinheit aufweisen, mit der eine Informationseinheit, insbesondere ein RFID-Tag, des Beschichtungsmaterials, ausgelesen werden kann. Auf diese Weise lässt sich verifizieren, ob in einer bestimmten Aufnahme das "richtige" Beschichtungmaterial aufgenommen wurde, das gemäß einem Steuerbefehl auf einem bestimmten Werkstück aufgebracht werden soll.

Der Auflagetisch zur Aufnahme eines Werkstücks umfasst bevorzugt Rollen, über welche Rollen das Werkstück bewegt wird. Alternativ können Riemen vorgesehen sein. Dabei können einzelne Rollen oder alle Rollen angetrieben sein, oder am Auflagetisch ist ein Fördermechanismus vorgesehen, der das Werkstück über frei drehbare Rollen bewegt.

Obwohl das zuvor genannte Wechselsystem lediglich mit mindestens einer Aufnahme beschrieben wurde, ist es bevorzugt vorgesehen, dass das Wechselsystem mehrere Aufnahmen umfasst. Auf diese Weise kann eine Aufnahme zur Aufbringung eines Beschichtungsmaterials auf einem Werkstück verwendet werden, während eine andere Aufnahme mit einem neuen Beschichtungsmaterial beschickt wird.

Das erfindungsgemäße Verfahren, das mit den zuvor beschriebenen Merkmalen der Vorrichtung kombiniert werden kann, umfasst die Schritte: Beschicken einer Aufnahme mit einem Beschichtungsmaterial, insbesondere einer Verpackungseinheit mit einem Kaschiermaterial, Bewegen der Aufnahme von einer Aufnahmeposition, in der die Aufnahme mit dem Beschichtungsmaterial beschickt wird, in eine Betriebsposition, in der das Beschichtungsmaterial an einem Werkstück aufgebracht wird, Aufbringen des Beschichtungsmaterials auf einem Werkstück.

Diesem Verfahren können die folgenden Schritte vorangehen: Erstellen eines Dekorbildes des Beschichtungsmaterials, Übermitteln des Dekorbildes über eine Onlineverbindung, Verarbeiten der Daten und Erstellen eines Beschichtungsmaterials, Liefern des mit dem Dekorbild versehenen Beschichtungsmaterials.

Die genannten Schritte können sowohl vom Betreiber einer Anlage zur Durchführung des Verfahrens (Produzent der Werkstücke), als auch von einem Zulieferer durchgeführt werden.

Für die Kennzeichnung des Beschichtungsmaterials können Informationsspeichereinheiten auf dem ersten Bereich des Kaschiermaterials (Dekorbogen) vorgesehen sein, oder an der insbesondere als Einwegverpackung ausgebildeten Verpackungseinheit des Beschichtungsmaterials. Somit kann eine Bestellung eines spezifischen Beschichtungsmaterials eindeutig zugeordnet werden, und es ist möglich, dieses individuell für ein bestimmtes Werkstück vorzusehen.

Mit den beschriebenen Verfahren kann auch das Kantenmaterial eines Werkstücks auf entsprechende Weise bereitgestellt werden. Demnach ist es möglich einzelne Werkstücke mit gleichem (oder aufeinander abgestimmten) Kaschier- und Kantenmaterial in Losgröße 1 kostengünstig herzustellen.

Ferner ist es möglich, einen bereits vorhandenen Datensatz, der ein bestimmtes Dekor definiert, für spätere Arbeitsschritte zu nutzen. Liegen beispielsweise bereits Informationen zu einem bestimmten Dekor vor, das für ein Kaschiermaterial genutzt wird/wurde, kann das Kantenmaterial hierauf abgestimmt hergestellt bzw. eine Schmalfläche eines Werkstücks entsprechend bedruckt werden, oder umgekehrt.

### Kurze Beschreibung der Zeichnungen

- Fig. 1: zeigt eine erste Ausführungsform der vorliegenden Erfindung in einer schematischen Darstellung
- Fig. 2: zeigt eine Modifikation der in Figur 1 dargestellten ersten Ausführungsform
- Fig. 3: zeigt eine zweite Ausführungsform der vorliegenden Erfindung in einer schematischen Darstellung
- Fig. 4: zeigt eine dritte Ausführungsform der vorliegenden Erfindung in einer schematischen Darstellung

### Detaillierte Beschreibung der bevorzugten Ausführungsformen

Nachfolgend werden Ausführungsformen der vorliegenden Erfindung im Detail erläutert. Einzelne Merkmale bestimmter Ausführungsformen können jeweils mit Einzelmerkmalen anderer Ausführungsformen kombiniert werden, um neue Varianten auszubilden. Entsprechendes gilt für Modifikationen, die im Rahmen der nachfolgend beschriebenen Ausführungsformen aufgeführt sind.

### Erste Ausführungsform

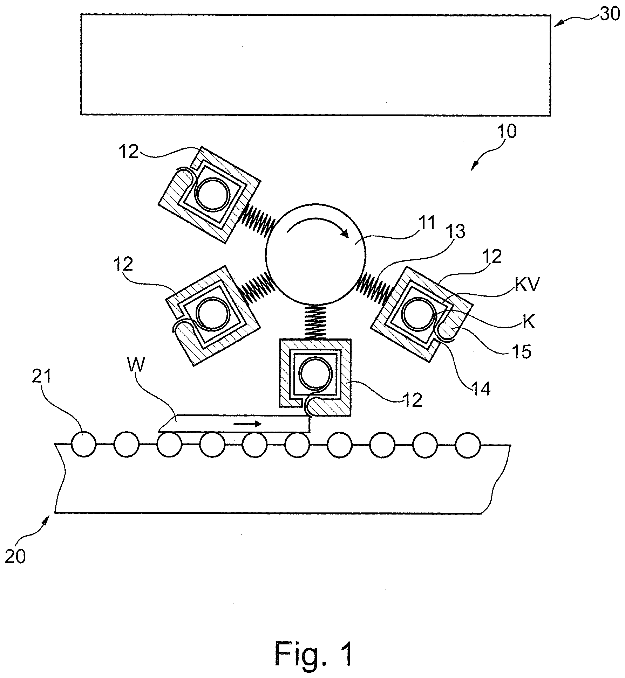

In der schematischen Darstellung von Fig. 1 werden ein Wechselmechanismus 10, ein Auflagetisch 20 sowie eine Lagereinheit 30 schematisch dargestellt.

Der Auflagetisch 20 umfasst in der vorliegenden Ausführungsform eine Vielzahl von Rollen 21, über die ein Werkstück W gleiten kann. Hierbei können einige der Rollen 21 angetrieben sein, um das Werkstück W in der durch den Pfeil in Fig. 1 angedeuteten Richtung zu bewegen. Auch können in einer alternativen Ausführungsform die Rollen 21 frei beweglich sein, und das Werkstück W wird über einen nicht näher dargestellten Mechanismus, beispielsweise einen oder mehrere Riemen, entlang des Auflagetisches 20 bewegt.

Der Wechselmechanismus 10 umfasst eine Wechseleinheit 11, die sich in der in Fig. 1 dargestellten Ausführungsform im Uhrzeigersinn drehen kann. Ferner kann die Wechseleinheit 11 in einer vertikalen Richtung bewegt werden.

An der Wechseleinheit 11 sind mehrere Aufnahmen 12 angebracht, die im Wesentlichen gleich ausgebildet sind. Demnach wird nachfolgend lediglich eine dieser Aufnahmen 12 näher erläutert. Die Anzahl der Aufnahmen 12 ist nicht beschränkt: Es können eine, zwei oder mehrere Aufnahmen 12 vorgesehen sein.

Die Aufnahme 12 ist über ein elastisches Element 13 mit der Wechseleinheit 11 verbunden. Die Elastizität wird hierbei in einer im Wesentlichen radialen Richtung zwischen der Aufnahme 12 und der Wechseleinheit 11 bereitgestellt. Aufgabe des elastischen Elements 13 ist es unter anderem, die auftretenden Toleranzen (vorrangig Werkstücktoleranzen) durch die taktil-federnde Lagerung der Aufnahmen 12 zu kompensieren. Mit anderen Worten weicht die Aufnahme 12 beim Aufkaschieren um den Betrag von der Werkstückoberfläche zurück, der oberhalb des Sollmaßes der Werkstückdicke liegt. Nach einigen Millimetern, in welchen das Kaschiermaterial K mit dem eingestellten Anpressdruck auf die Werkstückoberfläche gepresst wurde, kann das Führungselement abgehoben werden.

Alternativ zur Verwendung eines elastischen Elements können auch Lageregelungsalgorithmen eine Positionierung der Aufnahme relativ zur Werkstückoberfläche durchführen.

Ferner umfasst die gehäuseförmig ausgebildete Aufnahme 12 eine Öffnung 14, durch die, wie nachfolgend detaillierter beschrieben, ein Kaschiermaterial K gelangen kann. An einer Seite der Öffnung 14 ist ein Führungselement 15 vorgesehen, welches das Kaschiermaterial K führt und ein Andrücken des Kaschiermaterials K an einem Werkstück W bewirkt. In der vorliegenden Ausführungsform ist das Führungselement 15 wulstförmig ausgebildet.

Zusätzlich kann im Bereich des Führungselements 15 eine Heizeinrichtung vorgesehen sein, um ein Biegen des Kaschiermaterials K zu erleichtern bzw. ein Brechen dieses zu verhindern. Eine solche Heizeinrichtung kann für bestimmte Kaschiermaterialien K zum Einsatz kommen, während andere Kaschiermaterialen K auf einen solchen Wärmeeintrag empfindlich reagieren. Demnach ist eine Heizeinrichtung gemäß dieser Variante variabel zuschaltbar. In einer zusätzlichen Modifikation kann die Temperatur geregelt werden, um diese mit dem in der Aufnahme 12 aufgenommenen Kaschiermaterial K abzustimmen.

Innerhalb der Aufnahme 12 wird eine Verpackungseinheit KV für ein Kaschiermaterial K aufgenommen. Diese wird vom Hersteller des Kaschiermaterials K bereitgestellt, und nimmt dieses auf. Bei der Verpackungseinheit KV handelt es sich üblicherweise um eine Einwegverpackung. Das Kaschiermaterial wird darin in einem gerollten Zustand aufgenommen, üblicherweise ohne eine zusätzliche Drehachse bereitzustellen.

In der in vertikaler Richtung oberhalb des Wechselmechanismus 10 vorgesehenen Lagereinheit 30 wird eine nicht näher gezeigte Anzahl der Verpackungseinheiten KV vorgehalten. Diese können bei Bedarf von einer Aufnahmen 12 aufgenommen, und zur Beschichtung eines Werkstücks W bereitgestellt werden.

Der Betrieb der in Fig. 1 schematisch dargestellten Vorrichtung stellt sich wie folgt dar.

Zunächst wird eine Verpackungseinheit KV mit einem entsprechenden Kaschiermaterial K manuell oder durch einen Mechanismus der Lagereinheit 30 gesteuert in eine Aufnahme 12 eingeschoben. Dies geschieht in der dargestellten Ausführungsform in einer horizontalen Richtung. Die Wechseleinheit 11 des Wechselmechanismus 10 führt eine Drehung durch, und bringt die Aufnahme 12 mit der Verpackungseinheit KV in eine in vertikaler Richtung nach unten weisende Ausrichtung, sodass sich zwischen der Aufnahme 12 und den Rollen 21 des Auflagetisches 20 ein Spalt ergibt, der im Wesentlichen der Dicke eines Werkstücks W und Beschichtungsmaterial K bzw. etwas weniger als eine Summe dieser entspricht.

Anschließend wird ein Werkstück W in Förderrichtung durch diesen Spalt bewegt (durch den Pfeil in Figur 1 angedeutet von links nach rechts), sodass das Kaschiermaterial K aufgrund der Adhäsionskraft zwischen dem Kaschiermaterial K und dem Werkstück W sowie durch den mittels des Führungselements 15 aufgebrachten Druck aus der Verpackungseinheit KV bzw. der Aufnahme 12 abgezogen und auf dem Werkstück W aufgebracht.

Alternativ zu einer stationären Anordnung der Aufnahme 12 während des Abziehens des Kaschiermaterials K kann die Aufnahme 12 bezogen auf die Geschwindigkeit der Werkstückvorderkante aufsynchronisiert werden. Beim Erreichen einer synchronen Geschwindigkeit zwischen dem Werkstück und der Aufnahme 12 erfolgt ein gesteuertes Aufsetzen des Kaschiermaterials K, gefolgt von einer positiven oder negativen Beschleunigung, das heißt eine Erhöhung oder Verringerung der Geschwindigkeit der Aufnahme. Demnach kommt es zu einer Relativbewegung zwischen der Aufnahme und dem Werkstück.

Auf diese Weise kann ein besonders sanftes Aufsetzen des Kaschiermaterials sowie eine Erhöhung der Positioniergenauigkeit erreicht werden. Das sanfte Aufsetzen ist insbesondere bei sensiblen, also beispielsweise dünnen, Kaschiermaterialien vorteilhaft.

Nachdem das Kaschiermaterial K aus der Aufnahme 12 abgezogen wurde, wird der Wechselmechanismus betätigt, und die Wechseleinheit 11 dreht die geleerte Aufnahme 12 weiter. Nun kann das nächste Werkstück durch ein Kaschiermaterial K der nächsten Aufnahme 12 beschichtet werden.

Die Beschickung der einzelnen Aufnahmen 12 mit dem Verpackungseinheiten KV kann während eines Kaschiervorgangs eines Werkstücks erfolgen, oder es kann eine Überlagerung mit einer Magazinierung vorgesehen sein.

Zwar ist es im Rahmen der vorliegenden Ausführungsform bevorzugt, dass das Kaschiermaterial K vorkonfektioniert in einer Verpackungseinheit KV bereitgestellt wird, also die Breite und Länge des Kaschiermaterials K im Wesentlichen den Dimensionen eines zu beschichtenden Werkstücks W entsprechen. Hierzu können auch mehrere Abschnitte des Kaschiermaterials K in einer Verpackungseinheit KV aufgenommen werden.

Zusätzlich ist es jedoch möglich, eine oder mehrere Schneideinrichtungen vorzusehen, die eine Breite oder eine Länge des Kaschiermaterials K je nach konkreter Anforderung bescheiden, sodass das entsprechend dimensionierte Kaschiermaterial K auf einem Werkstück W aufgebracht werden kann. Ggf. an den Kanten eines Werkstücks W überstehendes Kaschiermaterial K wird in einem nachfolgenden Arbeitsschritt abgebrochen oder beschnitten.

Im Rahmen der vorliegenden Ausführungsform ist die zur Aufnahme 12 weisende Seite des Werkstücks W, auf der das Kaschiermaterial K aufgebracht werden soll, mit einem Haftmittel versehen. Allerdings ist es auch möglich, ein Haftmittel am Kaschiermaterial K aufzubringen, bevor dieses auf das Werkstück W aufgedrückt wird. Diese Möglichkeit wird im Rahmen der nachfolgend beschriebenen dritten Ausführungsform näher erläutert, kann jedoch auch bei der in Fig. 1 dargestellten Ausführungsform zum Einsatz kommen.

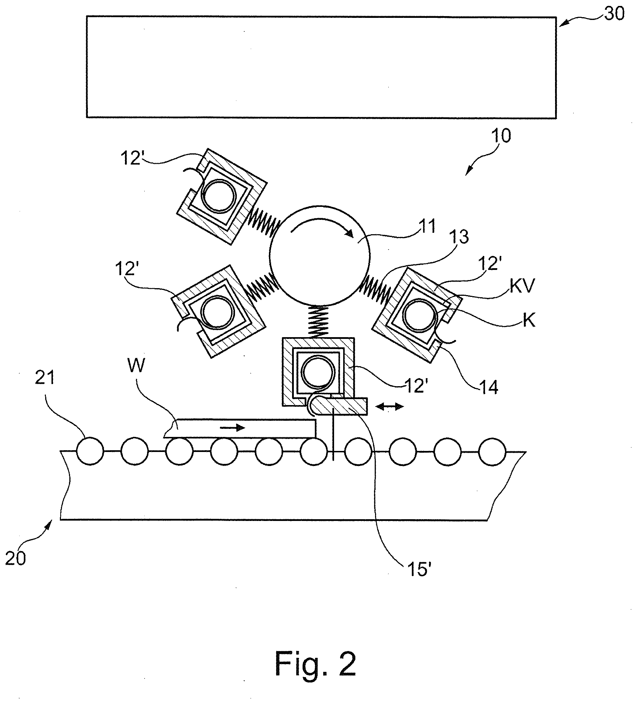

In Fig. 2 ist eine Modifikation der ersten Ausführungsform schematisch dargestellt, die sich im Wesentlichen durch die Ausgestaltung der Aufnahme 12' von der ersten Ausführungsform unterscheidet.

Die Aufnahme 12' der in Fig. 2 dargestellten Modifikation umfasst lediglich eine Öffnung 14, jedoch kein Führungselement 15. Vielmehr weist der Wechselmechanismus 10 ein Führungselement 15' auf, das zumindest in einer horizontalen Richtung, und ggf. auch in einer vertikalen Richtung, oder bogenförmig, verstellt werden kann. Das Führungselement 15' kann zusammen mit einer der Aufnahmen 12', mit der ein Beschichtungsmaterial auf einem Werkstück aufgebracht werden soll, bewegt werden, so dass sich das Führungselement 15' beim Aufbringen des Beschichtungsmaterials mit der Aufnahme 12' dieser annähert, oder diese gar berührt. In diesem Zustand übernimmt das Führungselement 15' eine entsprechende Aufgabe wie das Führungselement 15 der ersten Ausführungsform, nämlich das Beschichtungsmaterial zu führen und ggf. an ein Werkstück andrücken.

Die in Fig. 2 dargestellte Modifikation der ersten Ausführungsform weist somit ein Führungselement für alle Aufnahmen 12' auf, wodurch das Gewicht der Aufnahme(n) reduziert wird. Ferner weisen die Aufnahmen einen einfacheren Aufbau auf.

Darüber hinaus kann der Wechselmechanismus nicht nur das in Fig. 2 dargestellte Führungselement 15' aufweisen. Vielmehr können verschiedene Führungselemente individuell zustellbar sein, so dass das für ein bestimmtes Beschichtungsmaterial geeignetste Führungselement zugestellt werden kann.

Ferner ist es in einer weiteren Ausgestaltung vorgesehen, dass das Führungselement 15' in einen Halter einwechselbar ist. Auf diese Weise können verschiedene Führungselemente vorgehalten werden, die dann je nach Bedarf zum Einsatz kommen.

### Zweite Ausführungsform

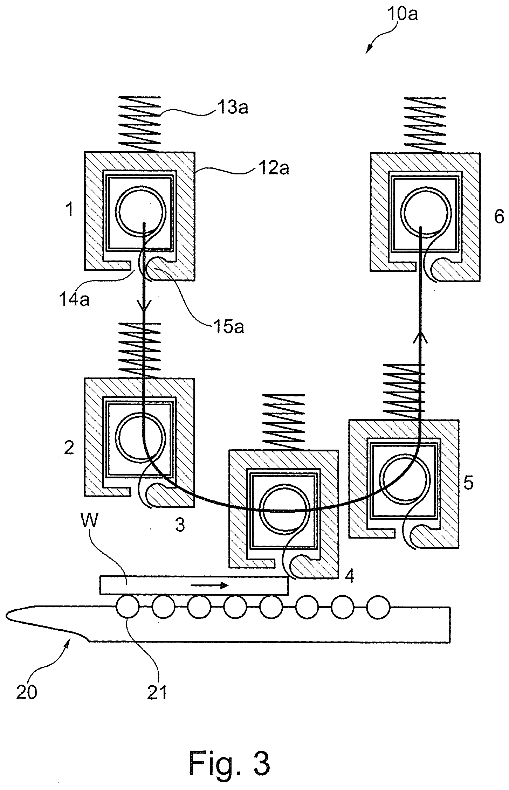

In Fig. 3 wird eine zweite Ausführungsform der vorliegenden Erfindung schematisch dargestellt. Dabei ist der Auflagetisch 20 ähnlich demjenigen der in Fig. 1 dargestellten Ausführungsform ausgebildet. Auch die Aufnahme 12a zur Aufnahme einer Verpackungseinheit KV entspricht im Wesentlichen der Aufnahme 12 gemäß der ersten Ausführungsform.

Allerdings umfasst der Wechselmechanismus 10a der zweiten Ausführungsform keine Wechseleinheit 11, sondern die Aufnahme 12a ist entlang translatorischer Richtungen horizontal bzw. vertikal bewegbar. Auch wenn die zweite Ausführungsform ebenfalls bevorzugt mehrere Aufnahmen umfasst, sind in Fig. 3 lediglich mehrere Positionen einer bestimmten Aufnahme dargestellt.

Wie in der ersten Ausführungsform wird die Aufnahme 12a über ein elastisches Element 13a gelagert, dessen Ausgestaltung dem elastischen Element 13a der ersten Ausführungsform gleicht oder ähnelt. Die Anbringung des elastischen Elements 13a an einer Verfahreinheit ist nicht explizit abgebildet.

In Fig. 3 sind mehrere Positionen der Aufnahme 12a dargestellt, die auch den Verfahrensablauf zum Aufbringen des Kaschiermaterial K auf dem Werkstück W wiedergeben. Zunächst wird die Aufnahme 12a von der Position 1, in der beispielsweise die Verpackungseinheit KV in die Aufnahme 12 eingewechselt wird, in die Warteposition 2 verfahren. Sobald ein Werkstück W erfasst wird, wird die sogenannte Beschleunigungsphase 3 gestartet. Hierbei wird die Aufnahme 12a auf die Geschwindigkeit der Werkstückvorderkante aufsynchronisiert. Beim Erreichen einer synchronen Bewegung im Bereich der Position 4 erfolgt das Aufsetzen des Kaschiermaterials K über ein im Bereich einer Öffnung 14a angeordneten Führungselement 15a auf der zu beschichtenden Seite des Werkstücks W. Nach einem Anhaften des Kaschiermaterials K im Bereich der Werkstückvorderkante erfolgt eine positive oder negative Beschleunigung der Aufnahme in Richtung der Position 5 oder der Position 2, je nach Ausführung des losgrößenbezogenen Kaschiermaterials K.

Die Aufnahme 12a verweilt hiernach in der Position 2 oder 5. In diesem Zustand kann das nächste Werkstück W mit einem weiteren Kaschiermaterial K auf der gleichen Aufnahme 12a (bspw. Position 2) oder mit einem anderen Kaschiermaterial K aus einer anderen Aufnahme 12a beschichtet werden.

Wird ein Wechsel des Kaschiermaterials K vorgegeben, so wird die Aufnahme 12a aus dem Arbeitsbereich (zwischen den Positionen 2-5) in den Bereich der Position 6 bewegt, sodass die nächste Aufnahme 12a über die Position 1 in die Warteposition 2 nachrücken kann.

Es ist ersichtlich, dass die zweite Ausführungsform wie die Modifikation der ersten Ausführungsform ein von der Aufnahme separates Führungselement aufweisen kann.

### Dritte Ausführungsform

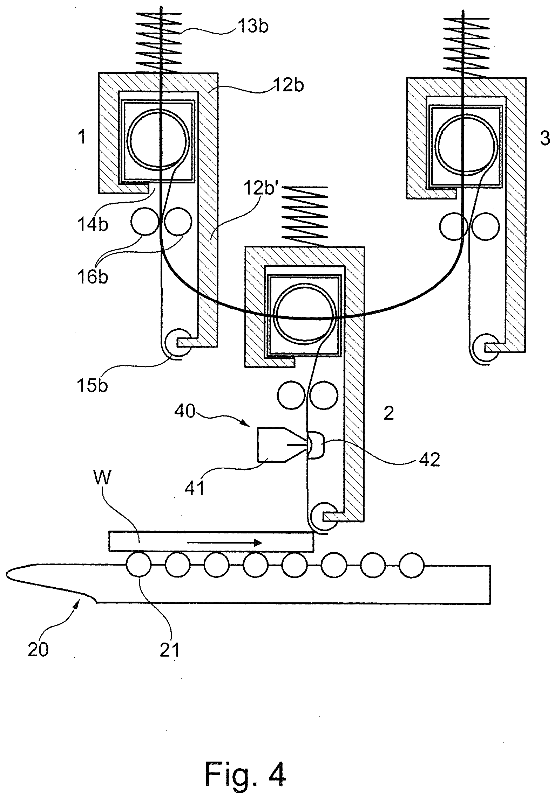

In Fig. 4 wird eine weitere Ausführungsform der vorliegenden Erfindung erläutert, die sich im Wesentlichen durch die Ausgestaltung der Aufnahme 12b von derjenigen der zweiten Ausführungsform unterscheidet.

Insbesondere wird die Aufnahme 12b über ein elastisches Element 13b gelagert, das demjenigen der zweiten Ausführungsform gleicht oder ähnelt, und nimmt eine Verpackungseinheit KV mit einem Kaschiermaterial K auf. An einer in vertikaler Richtung nach unten weisenden Seite der Aufnahme 12b ist eine Öffnung 14b vorgesehen, durch die Kaschiermaterial K vom Inneren der Aufnahme 12b nach außen gelangen kann.

Im Bereich der Öffnung 14b ist ein Rollenpaar 16b vorgesehen, wobei eine der Rollen 16b oder beide angetrieben ist. Diese Rollen 16b sorgen dafür, dass das Kaschiermaterial K aus dem Inneren der Aufnahme 12b gesteuert abgezogen wird.

Die Aufnahme 12b umfasst ferner einen Arm 12b', der sich in vertikaler Richtung nach unten erstreckt, und an dessen distalem Ende eine Rolle 15b aufgenommen ist. Diese Rolle 15b erfüllt eine ähnliche Aufgabe wie das Führungselement 15, 15a der ersten bzw. zweiten Ausführungsform.

Die Vorrichtung umfasst ferner eine Haftmittelauftragseinheit 40, die in der vorliegenden Ausführungsform eine Düse 41 sowie ein Gegenstück 42 umfasst. Zwischen der Düse 41 und dem Gegenstück 42 wird das Kaschiermaterial K zwischen den Rollen 16b und der Rolle 15b geführt.

Die Haftmittelaufbringeinheit 40 könnte zwar mit der Aufnahme 12b kombiniert sein. Allerdings ist es im Rahmen der vorliegenden Ausführungsform vorgesehen, dass die Haftmittelaufbringeinheit 40 separat vorgesehen ist, und zum Aufbringen eines Haftmittels in eine entsprechende Position relativ zur Aufnahme 12b gebracht wird.

In Fig. 4 wird in Position 1 eine Wartestellung der Aufnahme 12 dargestellt, in der die Aufnahme 12b vorgehalten wird.

In Position 2 befindet sich die Aufnahme 12 in einer Arbeitsstellung, nachdem die Geschwindigkeit der Aufnahme 12b mit der Bewegung der Vorderkante des Werkstücks W synchronisiert wurde oder - wie in der ersten Ausführungsform
- einen definierten Spalt zwischen den Rollen 21 des Auflagetisches 20 und der Rolle 15b der Aufnahme 12b ausbildet.

Im Bereich der Position 3 ist eine zusätzliche Aufnahme 12b bzw. eine Wechselstellung der bereits erläuterten Aufnahme 12b dargestellt.

In der in Fig. 4 dargestellten Ausführungsform umfasst die Haftmittelaufbringeinheit 40 eine Düse 41. Alternativ kann es auch vorgesehen sein, dass das Haftmittel in Form eines Haftmittelfilms von einer Rolle abgezogen, und durch eine Andrückeinheit auf das Kaschiermaterial K aufgedrückt wird.

Ferner ist ersichtlich, dass die Haftmittelaufbringeinheit 40 in dem Fall entfallen kann, wenn auf dem Werkstück ein Haftmittel aufgebracht wird, wie im Falle der ersten und zweiten Ausführungsform.

In den beschriebenen Ausführungsformen der vorliegenden Erfindung ist das Kaschiermaterial K in einer Verpackungseinheit KV aufgenommen. Die Verpackungseinheit KV (oder alternativ das Kaschiermaterial K selbst) ist mit einer Informationsspeichereinheit versehen, beispielsweise einem RFID-Tag. Auf der Informationsspeichereinheit sind spezifische Informationen bezüglich des Kaschiermaterials K hinterlegt. Diese Daten werden beim Hersteller des Kaschiermaterials in der Informationsspeichereinheit abgespeichert.

Die Verpackungseinheit KV wird anschließend zum Kunden geliefert, und in der Lagereinheit 30 aufgenommen. Je nach konkreter Anforderung wird die Verpackungseinheit KV, wie zuvor beschrieben, in eine Aufnahme eingewechselt, und das darin aufgenommene Kaschiermaterial K wird zum Beschichten eines Werkstücks W verwendet. Dadurch, dass die Informationsspeichereinheit spezifische Informationen bezüglich des Kaschiermaterials K enthält, und diese Informationen ausgelesen werden können, kann ein bestimmtes Kaschiermaterial K je nach Kundenwunsch für das Beschichten eines Werkstücks W bereitgestellt werden.

Dabei kann der Kunde z.B. online beim Hersteller des Kaschiermaterials mittels eines Dekordruckers ein bestimmtes Dekorbild und die gewünschte Dimension des Kaschiermaterials K erstellen lassen. Somit kann der Kunde mittels Digitaldruck die Haupt- und Schmalflächen eines Werkstücks dekorgleich gestalten lassen. Über die Bestellung erhält der Kunde eine eindeutige Dekorinformation bezüglich des Kaschiermaterials, die zur Anlagensteuerung sowohl an der Kaschierlinie als auch an der Einheit zum Beschichten der Schmalseiten des Werkstücks verwendet wird. Die Informationsspeichereinheiten können sich auf dem ersten Bereich des Kaschiermaterials (Dekorbogen) befinden, oder, wie zuvor beschrieben, an der insbesondere als Einwegverpackung ausgebildeten Verpackungseinheit KV.

Auch die dritte Ausführungsform kann wie die Modifikation der ersten Ausführungsform ein von der Aufnahme separates Führungselement aufweisen kann.

In den vorangegangen Ausführungsformen wurde das Beschichtungsmaterial in einem gerollten bzw. gewickelten Zustand gezeigt. Alternativ kann dieses jedoch auch bogenförmig in einer Aufnahme aufgenommen sein.

## Patentansprüche

1. Wechselsystem für eine Beschichtungsmaschine, insbesondere Kaschiermaschine, mit:
einem Auflagetisch (20) zur Aufnahme eines Werkstücks (W),
mindestens einer Aufnahme (12, 12a, 12b) zur Aufnahme eines Beschichtungsmaterials (K), insbesondere einer Verpackungseinheit (KV) mit einem Kaschiermaterial (K), welche Aufnahme (12, 12a, 12b) mit einer Öffnung (14, 14a, 14b) versehen ist,
wobei ein Führungselement (15, 15a, 15b) zum Führen und Anbringen des Beschichtungsmaterials (K) an einem Werkstück (W) vorgesehen ist,**dadurch gekennzeichnet, dass** das Führungselement (15, 15a, 15b) an der Aufnahme (12, 12a, 12b) integriert ist,
und die Aufnahme (12, 12a, 12b) zwischen einer Aufnahmeposition, in der die Aufnahme mit dem Beschichtungsmaterial beschickt wird, und einer Betriebsposition bewegbar ist, in der das Beschichtungsmaterial an einem Werkstück aufgebracht wird.

2. Wechselsystem für eine Beschichtungsmaschine, insbesondere Kaschiermaschine, mit:
einem Auflagetisch (20) zur Aufnahme eines Werkstücks (W),
mindestens einer Aufnahme (12') zur Aufnahme eines Beschichtungsmaterials (K), insbesondere einer Verpackungseinheit (KV) mit einem Kaschiermaterial (K), welche Aufnahme (12') mit einer Öffnung (14) versehen ist,**dadurch gekennzeichnet, dass** ein Führungselement (15') zum Führen und Anbringen des Beschichtungsmaterials (K) an einem Werkstück (W) vorgesehen ist, welches Führungselement (15') separat von der Aufnahme (12') vorgesehen ist und sich beim Anbringen des Beschichtungsmaterials mit der Aufnahme (12') dieser annähert oder diese berührt,
und die Aufnahme (12') zwischen einer Aufnahmeposition, in der die Aufnahme mit dem Beschichtungsmaterial beschickt wird, und einer Betriebsposition bewegbar ist, in der das Beschichtungsmaterial an einem Werkstück aufgebracht wird.

3. Wechselsystem gemäß einem der vorangegangenen Ansprüche, **dadurch gekennzeichnet, dass** das Führungselement (15, 15', 15a, 15b) ein Heizelement umfasst.

4. Wechselsystem gemäß einem der vorangegangenen Ansprüche, **dadurch gekennzeichnet, dass** das Führungselement (15, 15', 15a) wulstförmig, insbesondere in Form einer Klothoide, ausgebildet ist oder eine Rolle (15b) aufweist.

5. Wechselsystem gemäß einem der vorangegangenen Ansprüche, **dadurch gekennzeichnet, dass** das Wechselsystem eine drehbare Wechseleinheit (11) aufweist, an der die Aufnahme (12, 12') aufgenommen ist, wobei die drehbare Wechseleinheit (11) bevorzugt in einer translatorischen Richtung, insbesondere horizontal und/oder vertikal, oder einer bogenförmigen Richtung verfahrbar ist.

6. Wechselsystem gemäß Anspruch 1 oder 2, **dadurch gekennzeichnet, dass** die Aufnahme (12, 12', 12a, 12b) mittels eines elastischen Elements (13, 13a, 13b) gelagert ist.

7. Wechselsystem gemäß einem der Ansprüche 1-4, **dadurch gekennzeichnet, dass** die Aufnahme (12a, 12b) in zumindest einer translatorischen Richtung, insbesondere horizontal und/oder vertikal, oder einer bogenförmigen Richtung verfahrbar ist.

8. Wechselsystem gemäß einem der vorangegangenen Ansprüche, **dadurch gekennzeichnet, dass** das Wechselsystem eine Haftmittelauftragseinheit (40) umfasst, insbesondere eine Düse (41) sowie ein Gegenstück (42), welche Haftmittelauftragseinheit (40) für einen Haftmittelauftrag auf ein Beschichtungsmaterial (K) bevorzugt relativ zu einer Aufnahme (12, 12', 12a, 12b) positionierbar ist.

9. Wechselsystem gemäß einem der vorangegangenen Ansprüche, **dadurch gekennzeichnet, dass** im Bereich der Öffnung (14, 14a, 14b) zumindest eine Rolle (16b) vorgesehen ist, um das in der Aufnahme (12, 12', 12a, 12b) befindliche Beschichtungsmaterial (K) auszufördern.

10. Wechselsystem gemäß einem der vorangegangenen Ansprüche, **dadurch gekennzeichnet, dass** das Wechselsystem eine Steuereinheit umfasst, die eine Bewegung der Aufnahme (12, 12', 12a, 12b) mit einer Bewegung eines Werkstücks (W) in einem Abschnitt synchronisiert, in welchem Abschnitt das Beschichtungsmaterial (K) mit dem Werkstück (W) in Kontakt kommt.

11. Wechselsystem gemäß einem der vorangegangenen Ansprüche, **dadurch gekennzeichnet, dass** das Wechselsystem eine Lagereinheit (30) umfasst, in der Verpackungseinheiten (KV) mit Beschichtungsmaterialien (K) aufgenommen sind.

12. Wechselsystem gemäß einem der vorangegangenen Ansprüche, **dadurch gekennzeichnet, dass** die Aufnahme (12, 12', 12a, 12b) eine Empfangseinheit aufweist, mit der eine Informationsspeichereinheit, insbesondere ein RFID-Tag, des Beschichtungsmaterials (K) ausgelesen werden kann.

13. Wechselsystem gemäß einem der vorangegangenen Ansprüche, **dadurch gekennzeichnet, dass** das Wechselsystem mehrere Aufnahmen (12, 12', 12a, 12b) umfasst.

14. Verfahren zum Bereitstellen eines Beschichtungsmaterials, umfassend die Schritte:
Beschicken einer Aufnahme (12, 12', 12a, 12b) mit einem Beschichtungsmaterial (K), insbesondere einer Verpackungseinheit (KV) mit einem Kaschiermaterial (K), welche Aufnahme (12, 12', 12a, 12b) mit einer Öffnung (14, 14a, 14b) versehen ist
(A) wobei ein Führungselement (15, 15a, 15b) zum Führen und Anbringen des Beschichtungsmaterials (K) an einem Werkstück (W) vorgesehen ist,
wobei das Führungselement (15, 15a, 15b) an der Aufnahme (12, 12a, 12b) integriert ist,
oder
(B) ein Führungselement (15') zum Führen und Anbringen des Beschichtungsmaterials (K) an einem Werkstück (W) vorgesehen ist, welches Führungselement (15') separat von der Aufnahme (12') vorgesehen ist und sich beim Anbringen des Beschichtungsmaterials mit der Aufnahme (12') dieser annähert oder diese berührt,
Bewegen der Aufnahme (12, 12', 12a, 12b) von einer Aufnahmeposition, in der die Aufnahme mit dem Beschichtungsmaterial beschickt wird, in eine Betriebsposition, in der das Beschichtungsmaterial an einem Werkstück aufgebracht wird,
Aufbringen des Beschichtungsmaterials an einem Werkstück.

15. Verfahren gemäß Anspruch 14, **gekennzeichnet durch** die Schritte vor dem Beschicken des Beschichtungsmaterials:
Erstellen eines Dekorbildes des Beschichtungsmaterials (K)
Übermitteln der Daten des Dekorbildes über eine Onlineverbindung,
Verarbeiten der Daten und Erstellen eines Beschichtungsmaterials,
Bereitstellen des mit dem Dekorbild versehenen Beschichtungsmaterials (K).

## Claims

1. Exchange system for a coating machine, in particular a laminating machine, having:
a supporting table (20) for receiving a workpiece (W),
at least one receptacle (12, 12a, 12b) for receiving a coating material (K), in particular a packaging unit (KV) with a laminating material (K), which receptacle (12, 12a, 12b) is provided with an opening (14, 14a, 14b),
wherein a conducting element (15, 15a, 15b) is provided for conducting and applying the coating material (K) to a workpiece (W),
**characterised in that** the conducting element (15, 15a, 15b) is integrated on the receptacle (12, 12a, 12b),
and the receptacle (12, 12a, 12b) is movable between a receiving position in which the receptacle is supplied with the coating material, and an operating position in which the coating material is applied to a workpiece.

2. Exchange system for a coating machine, in particular a laminating machine, having:
a supporting table (20) for receiving a workpiece (W),
at least one receptacle (12') for receiving a coating material (K), in particular a packaging unit (KV) with a laminating material (K), which receptacle (12') is provided with an opening (14),
**characterised in that** a conducting element (15') is provided for conducting and applying the coating material (K) to a workpiece (W), which conducting element (15') is provided separately from the receptacle (12') and, when the coating material is applied with the receptacle (12'), moves closer to the latter or touches it,
and the receptacle (12') is movable between a receiving position in which the receptacle is supplied with the coating material, and an operating position in which the coating material is applied to a workpiece.

3. Exchange system according to any of the preceding claims, **characterised in that** the conducting element (15, 15', 15a, 15b) comprises a heating element.

4. Exchange system according to any of the preceding claims, **characterised in that** the conducting element (15, 15', 15a) is bead-like, in particular in the form of a clothoid, or has a roller (15b).

5. Exchange system according to any of the preceding claims, **characterised in that** the exchange system has a rotatable exchange unit (11) on which the receptacle (12, 12') is received, wherein the rotatable exchange unit (11) is preferably movable in a translational direction, in particular horizontally and/or vertically, or an arcuate direction.

6. Exchange system according to claim 1 or 2, **characterised in that** the receptacle (12, 12', 12a, 12b) is mounted by means of an elastic element (13, 13a, 13b).

7. Exchange system according to any of claims 1-4, **characterised in that** the receptacle (12a, 12b) is movable in at least one translational direction, in particular horizontally and/or vertically, or an arcuate direction.

8. Exchange system according to any of the preceding claims, **characterised in that** the exchange system comprises an adhesive-applying unit (40), in particular a nozzle (41) and a companion part (42), which adhesive-applying unit (40) can be positioned preferably relative to a receptacle (12, 12', 12a, 12b) for adhesive application to a coating material (K).

9. Exchange system according to any of the preceding claims, **characterised in that** in the region of the opening (14, 14a, 14b) is provided at least one roller (16b) for discharging the coating material (K) which is in the receptacle (12, 12', 12a, 12b).

10. Exchange system according to any of the preceding claims, **characterised in that** the exchange system comprises a control unit which synchronises a movement of the receptacle (12, 12', 12a, 12b) with a movement of a workpiece (W) in a section, in which section the coating material (K) comes into contact with the workpiece (W).

11. Exchange system according to any of the preceding claims, **characterised in that** the exchange system comprises a mounting unit (30) in which packaging units (KV) with coating materials (K) are received.

12. Exchange system according to any of the preceding claims, **characterised in that** the receptacle (12, 12', 12a, 12b) has a receiving unit with which an information storage unit, in particular a RFID tag, of the coating material (K) can be read out.

13. Exchange system according to any of the preceding claims, **characterised in that** the exchange system comprises several receptacles (12, 12', 12a, 12b).

14. Method for providing a coating material, comprising the steps of:
supplying a receptacle (12, 12', 12a, 12b) with a coating material (K), in particular a packaging unit (KV) with a laminating material (K), which receptacle (12, 12', 12a, 12b) is provided with an opening (14, 14a, 14b),
(A) wherein a conducting element (15, 15a, 15b) is provided for conducting and applying the coating material (K) to a workpiece (W),
wherein the conducting element (15, 15a, 15b) is integrated on the receptacle (12, 12a, 12b),
or
(B) a conducting unit (15') is provided for conducting and applying the coating material (K) to a workpiece (W), which conducting element (15') is provided separately from the receptacle (12') and, when the coating material is applied with the receptacle (12'), moves closer to the latter or touches it,
moving the receptacle (12, 12', 12a, 12b) from a receiving position in which the receptacle is supplied with the coating material, to an operating position in which the coating material is applied to a workpiece,
applying the coating material to a workpiece.

15. Method according to claim 14, **characterised by** the steps, before supply of the coating material, of:
producing a decorative image of the coating material (K),
transmitting the data of the decorative image via an online connection,
processing the data and producing a coating material,
providing the coating material (K) provided with the decorative image.

## Revendications

1. Système de changement pour une machine de revêtement, en particulier pour une machine à contrecoller, avec :
un plateau porte-pièce (20) destiné à loger une pièce (W),
au moins un logement (12, 12a, 12b) destiné à loger un matériau de revêtement (K), en particulier une unité d'emballage (KV) avec un matériau de contrecollage (K), lequel logement (12, 12a, 12b) est muni d'une ouverture (14, 14a, 14b),
dans lequel un élément de guidage (15, 15a, 15b) est prévu pour guider et apporter le matériau de revêtement (K) à une pièce (W),
**caractérisé en ce que**
l'élément de guidage (15, 15a, 15b) est intégré au logement (12, 12a, 12b)
et le logement (12, 12a, 12b) est déplaçable entre une position de logement, dans laquelle le logement est alimenté en matériau de revêtement, et une position de fonctionnement, dans laquelle le matériau de revêtement est appliqué sur une pièce.

2. Système de changement pour une machine de revêtement, en particulier pour une machine à contrecoller, avec :
un plateau porte-pièce (20) destiné à loger une pièce (W),
au moins un logement (12') destiné à loger un matériau de revêtement (K), en particulier une unité d'emballage (KV) avec un matériau de contrecollage (K), lequel logement (12') est muni d'une ouverture (14),
**caractérisé en ce que**
un élément de guidage (15') est prévu pour guider et apporter le matériau de revêtement (K) à une pièce (W), lequel élément de guidage (15') est prévu séparément du logement (12') et se rapproche de celui-ci ou le touche lors de l'apport du matériau de revêtement avec le logement (12'),
et le logement (12') est déplaçable entre une position de logement, dans laquelle le logement est alimenté en matériau de revêtement, et une position de fonctionnement, dans laquelle le matériau de revêtement est appliqué sur une pièce.

3. Système de changement selon l'une des revendications précédentes, **caractérisé en ce que** l'élément de guidage (15, 15', 15a, 15b) comprend un élément de chauffage.

4. Système de changement selon l'une des revendications précédentes, **caractérisé en ce que** l'élément de guidage (15, 15', 15a) est réalisé en forme de bourrelet, en particulier en forme de clothoïde, ou présente un rouleau (15b).

5. Système de changement selon l'une des revendications précédentes, **caractérisé en ce que** le système de changement présente une unité de changement (11) rotative, au niveau de laquelle est logé le logement (12, 12'), dans lequel l'unité de changement (11) rotative est déplaçable de manière préférée dans une direction de translation, en particulier horizontalement et/ou verticalement, ou dans une direction en forme d'arc.

6. Système de changement selon la revendication 1 ou 2, **caractérisé en ce que** le logement (12, 12', 12a, 12b) est soutenu au moyen d'un élément (13, 13a, 13b) élastique.

7. Système de changement selon l'une des revendications 1-4, **caractérisé en ce que** le logement (12a, 12b) est déplaçable dans au moins une direction de translation, en particulier horizontalement et/ou verticalement, ou dans une direction en forme d'arc.

8. Système de changement selon l'une des revendications précédentes, **caractérisé en ce que** le système de changement comprend une unité d'application d'adhésif (40), en particulier une buse (41) ainsi qu'une pièce complémentaire (42), laquelle unité d'application d'adhésif (40) est positionnable de manière préférée par rapport à un logement (12, 12', 12a, 12b) en vue d'une application d'adhésif sur un matériau de revêtement (K).

9. Système de changement selon l'une des revendications précédentes, **caractérisé en ce qu'**est prévu dans la zone de l'ouverture (14, 14a, 14b) au moins un rouleau (16b) afin de faire sortir le matériau de revêtement (K) se trouvant dans le logement (12, 12', 12a, 12b).

10. Système de changement selon l'une des revendications précédentes, **caractérisé en ce que** le système de changement comprend une unité de commande, qui synchronise un mouvement du logement (12, 12', 12a, 12b) avec un mouvement d'une pièce (W) dans un secteur, dans lequel le matériau de revêtement (K) vient en contact avec la pièce (W).

11. Système de changement selon l'une des revendications précédentes, **caractérisé en ce que** le système de changement comprend une unité de soutien (30), dans laquelle sont logées des unités d'emballage (KV) avec des matériaux de revêtement (K).

12. Système de changement selon l'une des revendications précédentes, **caractérisé en ce que** le logement (12, 12', 12a, 12b) présente une unité de réception, avec laquelle une unité de mémorisation d'informations, notamment une étiquette RFID, du matériau de revêtement (K) peut être lue.

13. Système de changement selon l'une des revendications précédentes, **caractérisé en ce que** le système de changement comprend plusieurs logements (12, 12', 12a, 12b).

14. Procédé destiné à mettre à disposition un matériau de revêtement, comprenant les étapes suivantes consistant à :
- alimenter un logement (12, 12', 12a, 12b) avec un matériau de revêtement (K), en particulier avec une unité d'emballage (KV) avec un matériau de contrecollage (K), lequel logement (12, 12', 12a, 12b) est muni d'une ouverture (14, 14a, 14b)
(A) dans lequel un élément de guidage (15, 15a, 15b) est prévu pour guider et apporter le matériau de revêtement (K) à une pièce (W),
dans lequel l'élément de guidage (15, 15a, 15b) est intégré au logement (12, 12a, 12b),
ou
(B) un élément de guidage (15') est prévu pour guider et apporter le matériau de revêtement (K) à une pièce (W), lequel élément de guidage (15') est prévu séparément du logement (12') et se rapproche de celui-ci ou le touche lors de l'apport du matériau de revêtement avec le logement (12'),
- déplacer le logement (12, 12', 12a, 12b) d'une position de logement, dans laquelle le logement est alimenté en matériau de revêtement, dans une position de fonctionnement, dans laquelle le matériau de revêtement est appliqué sur une pièce,
- appliquer le matériau de revêtement sur une pièce.

15. Procédé selon la revendication 14, **caractérisé par** les étapes précédant l'alimentation en matériau de revêtement, consistant à :
créer une image de décoration du matériau de revêtement (K)
transmettre les données de l'image de décoration par l'intermédiaire d'une liaison connectée,
traiter les données et créer un matériau de revêtement,
mettre à disposition le matériau de revêtement (K) muni de l'image de décoration.
